# EUROPÄISCHE PATENTSCHRIFT

(11) **EP 1 922 371 B1**
(45) Veröffentlichungstag und Bekanntmachung des Hinweises auf die Patenterteilung: **06.11.2013**
(21) Anmeldenummer: 06805673.8
(22) Anmeldetag: 08.09.2006
(51) Int. Cl.: C09D 183/04, C09D 5/08, C09D 4/06, C08K 5/00, C08K 5/54, C09D 4/00

(54) **SCHWEISSBARES KORROSIONSSCHUTZMITTEL UND BINDEMITTEL HIERFÜR**
WELDABLE CORROSION PROTECTION AGENT AND BINDING AGENT
AGENT ANTICORROSION SOUDABLE, ET LIANT CONÇU POUR CELUI-CI

(30) Priorität: 08.09.2005 DE 102005042899
(43) Veröffentlichungstag der Anmeldung: 21.05.2008
(73) Patentinhaber: EWALD DÖRKEN AG, 58313 Herdecke (DE)
(72) Erfinder: REUSMANN, Gerhard, 45259 Essen (DE); KRUSE, Thomas, 44229 Dortmund (DE); MERTENS, Heike, 58097 Hagen (DE)
(74) Vertreter: Kalkoff & Partner
(86) Internationale Anmeldenummer: PCT/EP2006/008775
(87) Internationale Veröffentlichungsnummer: WO 2007/028629

(56) Entgegenhaltungen:
- WO-A-97/01599
- WO-A-02/100151
- GB-A- 1 093 200
- JP-A- 61 068 238
- US-A- 3 859 101
- US-A- 5 324 545
- PATENT ABSTRACTS OF JAPAN Bd. 2003, Nr. 12, 5. Dezember 2003 (2003-12-05) & JP 2004 043585 A (DAINIPPON INK & CHEM INC), 12. Februar 2004 (2004-02-12)

## Beschreibung

Die Erfindung betrifft ein Korrosionsschutzmittel für Metalloberflächen, dass schweißbar ist, ein Bindemittel hierfür sowie ein beschichtetes Werkstück.

An Korrosionsschutzmittel, die schweißbar sind, werden hohe Anforderungen gestellt. Sie sollen sich einfach auf die Metalloberflächen der Werkstücke auftragen lassen, zuverlässigen Korrosionsschutz bieten und beim Schweißen der Werkstücke keine Schwächung der Schweißnaht verursachen.

Es sind schweißbare Korrosionsschutzmittel bekannt, die Zinkpartikel und organische oder anorganische Bindemittel enthalten. Diese Korrosionsschutzmittel basieren entweder auf Wasser oder auf organischen Lösungsmitteln. Wässrige Korrosionsschutzmittel werden wegen der sichereren Verarbeitung deutlich bevorzugt.

Typische Beispiele für schweißbare Korrosionsschutzmittel sind in den Patentanmeldungen DE 197 48 764, DE 199 51 133 und DE 100 22 075 von Henkel beschrieben. Ein organisches Bindemittel in wässriger Lösung wird jeweils mit pulverförmigern Metall und einem so genannten Korrosionsschutzpigment versetzt. Falls erforderlich, werden statt Wasser Lösungsmittelgemische eingesetzt. Zu den organischen Bindemitteln zählen Epoxidharze, aber auch blockierte PU-Harze. Falls erforderlich, sind dem Korrosionsschutzmittel Härter für die Bindemittel zugesetzt. Bei diesen Rezepturen hat es sich als nachteilig erwiesen, dass die Korrosionsschutzmittel einen isolierenden Effekt auf das beschichtete Werkstück haben, so dass das Verschweißten erschwert wird. Es hat sich als problematisch erwiesen, mit organischen Bindemitteln beim Schweißen die Leitfähigkeit zu gewährleisten, die eine schnelle, vollständige und fehlerfreie Schweißverbindung ermöglicht.

Andere Bindemittel, die weitgehend anorganisch aufgebaut sind, beispielsweise auf der Basis von Titanaten und Silanen, weisen eine etwas verbesserte Leitfähigkeit auf. Das Bindemittel wirkt aber immer noch isolierend zwischen den Korrosionsschutzpartikeln.

JP2004-04358A beschreibt ein Beschichtungsmittel, das einen Anti-Reflexionsfilm ausbildet. Es enthält ein in einem Lösungsmittel gelöstes, fluorhaltiges Copolymer. Das dort beschriebene Beschichtungsmittel eignet sich nicht für den Korrosionsschutz, insbesondere nicht für ein schweißbares Korrosionsschutzmittel.

WO02/100151 (Adsil) beschreibt eine Beschichtung, bei der das Kondensieren eines Silan u. a. durch geringe Mengen eines Metallalkohols katalysiert wird. Das Beschichtungsmittel kann PTFE als Hart-Schmierstoff enthalten, wenn Berührung abweisende Oberflächen gestaltet werden sollen.

Es stellt sich daher die Aufgabe, ein geeignetes Bindemittel für ein schwelssbares Korrosionsschutzmittel und ein schweissbares Korrosionsschutzmittel bereitzustellen, dass bei einfacher Verarbeitung eine zuverlässige und sichere Schweißverbindung gewährleistet

Diese Aufgabe wird gelöst mit einem Bindemittel gemäß Anspruch 1 und mit einem Korrosionsschuhmittel gemäß Anspruch 23 sowie durch ein Werkstück gemäß Anspruch 30.

Ein erfindungsgemäßes Bindemittel weist folgende Komponenten auf: mindestens eine Titan- und/oder eine Zirkonverbindung, mindestens ein organofimlmlonelles Silan und ein Lösungsmittel sowie mindestens ein fluoriertes Polymer, das in dem Lösungsmittel des Bindemittels unlöslich ist und wobei die Titan- und/oder eine Zirkonverbindung in einer Menge von mind. 12 Gew.-% bis 95 Gew.% bezogen auf 100 Ges.-% des Bindemittels eingesetzt ist. Insbesondere das als Feststoff zugesetzte fluorierte Polymer ist von Bedeutung für die gute Schweißbarkeit von metallischen Werkstücken, die mit diesem Bindemittel oder mit daraus hergestellten schweissbaren Korrosionsschutzmitteln, beschichtet sind. Sogar zwei beidseitig beschichtete Werkstücke können ohne weiteres verschweißt werden, wenn schweissbare Korrosionsschutzmittel unter Verwendung des erfindungsgemäßen Bindemittels hergestellt sind.

Insbesondere der Einsatz von Titanaten und/oder Zirkonaten hat sich erfindungsgemäß bewährt, da Titanate und Zirkonate offenbar neben den bekannt guten Eigenschaften der Haftvermittlung die Leitfähigkeit des Bindemittels bzw. des Korrosionsschutzmittels bei Erreichen der Schweißtemperatur erhöhen. Dies kann darauf zurückzuführen sein, dass einige Titan- und/oder Zirkonverbindungen -hier seien nur Titanoxide genannt- im anastasen Zustand Halbleiter-Eigenschaften zeigen.

Zur Unterstützung der Leitfähigkeit werden bevorzugt Titanate und/ oder Zirkonate, besonders bevorzugt organische Titanate bzw. Zirkonate eingesetzt. Insbesondere Chelate eignen sich zum Einsatz in Bindemitteln. Auch Mischungen verschiedener organischer Titanate und/oder Zirkonate können zweckmäßig eingesetzt werden.

Das bzw. die Titan- und/oder Zirkonverbindungen werden in einer Menge von 12 Gewichts-% bis 95 Gewichts-% bezogen auf das Bindemittel eingesetzt. Es werden für bevorzugte Ausführungen des Bindemittels mindestens 15 Gewichts-% der Metallverbindung eingesetzt. Als vorteilhaft hat sich ein Einsatz von bis zu 80 Gewichts-%, besonders bevorzugt von bis zu 70 Gewichts-%, vorzugsweise von bis zu 50 Gewichts-%, bevorzugt bis zu 40 Gewichts-%, jeweils bezogen auf das Bindemittel, erwiesen.

Organfunktionelle Silane, bzw. Monosilane sind als Bestandteil von Bindemitteln bekannt. Gemäß einer Weiterbildung werden in dem erfindungsgemäßen Bindemittel bevorzugt Methylphenyl-, Phenyl- und Methylsiliconharze eingesetzt. Auch Siliconharze mit Vinyl- oder Allylgruppen, Acrlyestern, Äthyleniminogruppen, fluorierten Phenylresten, Fluorderivaten, Hydroxyorganogruppen, Carboxyorganogruppen, Aminoalkylgruppen, Siloxan-Silazan-Mischpolymerisaten, Silan-Verbindungen mit Phenlyengruppen oder mit Cokondensationsprodukten mit organischen Harzen kommen in Betracht. Auch Mischungen der vorgenannten Silan-Verbindungen.

Das mindestens eine organofunktionelle Silan bzw. das mindestens eine organofunktionelle Monosilan ist vorzugsweise so gewählt, dass seine Zersetzungstemperatur unter der Schweißtemperatur liegt. Das organofunktionelle Silan zersetzt sich daher vor beziehungsweise spätestens bei Erreichen der Schweißtemperatur weitgehend. Das weitgehende oder vollständige Zersetzen des Silans trägt zur Bildung einer gleichmäßigen Schweißnaht bei. Das organofunktionelle Silan wird bevorzugt in einer Menge von 0,01 gehende oder vollständige Zersetzen des Silans trägt zur Bildung einer gleichmäßigen Schweißnaht bei. Das organofunktionelle Silan wird bevorzugt in einer Menge von 0,01 Gewichts-% bis 20 Gewichts-% bezogen auf das Bindemittel eingesetzt. Vorteilhaft ist ein Einsatz von mehr als 2 Gewichts-% , bevorzugt von mehr als 5 Gewichts-%. Rezepturen enthalten nach einer geeigneten Ausführung der Erfindung bis zu 15 Gewichts-%, besonders vorteilhaft bis zu 12 Gewichts-%, bevorzugt werden bis zu 10 Gewichts-% des organofunktionellen Silans eingesetzt, besonders bevorzugt bis zu 7 Gewichts-%, jeweils bezogen auf das Bindemittel. Die jeweils einzusetzende Menge des organofunktionellen Silans bzw. der Mischung organofunktioneller Silane ist abhängig vom jeweiligen Verwendungszweck und den Anforderungen an die Verarbeitung des Bindemittels.

Das Bindemittel weist nach einer vorteilhaften Ausführungsform ein organisches Lösungsmittel oder eine Mischung organischer Lösungsmittel auf. Geeignet sind insbesondere Alkohole, aliphatische und/oder aromatische Kohlenwasserstoffe und Ester.

Es hat sich überraschenderweise herausgestellt, dass feste, nicht im Lösungsmittel des Bindemittels lösliche fluorierte Polymere ein von üblichen Bindemitteln bzw. Polymeren abweichendes Bindungsverhalten zeigen. Solche unlöslichen, fluorierten Polymere ziehen nicht gleichmäßig auf alle Oberflächen auf, insbesondere nicht auf metallische Oberflächen. Sie neigen deshalb dazu, insel- oder punktförmig abzubinden. Dieses an sich meist unerwünscht Verhalten ermöglicht vorliegend jedoch, dass ein Bindemittel mit einem fluorierten Polymer, insbesondere bei der Verwendung als Korrosionsschutzmittel, einen verbesserten Kontakt leitfähiger Partikel, insbesondere von Korrosionsschutz-Partikeln, untereinander gewährleistet, da das pulverförmige Polymer -anders als ein flüssiges Bindemittel- nicht auf die zu beschichtende Metalloberfläche oder auf die leitfähigen Partikel aufzieht. Der Kontakt zwischen den leitfähigen Partikeln und der Metalloberfläche bleibt daher ohne die bisher übliche Durchsetzung durch das Bindemittel besonders gut, so dass sich eine sehr wirksame Korrosionsschutzmittel-Schicht ausbildet. Beim Einsatz als schweissbares Korrosionsschutzmittel gewährleistet die unmittelbare Bindung der Korrosionsschutzpartikeln eine besonders hohe Leitfähigkeit.

Das fluorierte Polymer wird im Bindemittel bevorzugt in Pulverform eingesetzt. Es ist also im Lösungsmittel des Bindemittels unlöslich. Das pulverförmige Polymer schmilzt bei steigenden Temperaturen und bindet bei einer Temperatur oberhalb Raumtemperatur und unterhalb Schweißtemperatur ab. Es bildet damit gewissermaßen punktförmige Verbindungen aus, so dass die für den Korrosionsschutz wesentliche Haftung der Metall-Partikel optimal erhalten bleibt. Es hat sich als besonders vorteilhaft erwiesen, dass das fluorierte Polymer auch bei mehrfachem Erhitzen seine Bindefähigkeit nicht verliert. Es ist zwar nicht auszuschließen, dass bei jedem Erhitzen auch Teile des fluorierten Polymers abgebaut werden. Die verbleibenden Anteil tragen jedoch bei jedem neuen Erhitzen wieder zur Bindung innerhalb der Beschichtung bei. Der bevorzugte Teilchen-Durchmesser des pulverförmigen, fluorierten Polymers richtet sich nach der gewünschten Filmdicke der aus dem Bindemittel hergestellten Beschichtung. Er liegt bevorzugt bei bis zu 20 µm, besonders bevorzugt bei bis zu 10 µm, vorteilhaft bei bis zu 5 µm.

Es ist mindestens ein fluoriertes Polymer im Bindemittel erforderlich, um die erfindungsgemäße Wirkung zu erzielen. Es können aber auch Mischungen fluorierter Polymere eingesetzt sein. Besonders bevorzugt werden - einzeln oder in Mischung eingesetzt - folgende fluorierte Polymere: Polytetrafluorethylen (PTFE), Polyvinylidenfluorid (PVDF), Tetrafluorethylen/Hexafluorpropylen-Copolymer (FEP), PerfluoralkoxyCopolymer (PFA), Copolymer von Tetrafluorethylen mit perfluoriertem Propylen und Perfluoralkylvinylether (EPE), Copolymer aus Tetrafluorethylen und Perfluormethylvinylether (MFA), Copolymer von Tetrafluorethylen mit Ethylen (ETFE), Polychlortrifluorethylen (PCTFE) und Copolymer von Ethylen sowie Chlortrifluorethylen (ECTFE).

Eine bevorzugte Ausführung des erfindungsgemäßen Bindemittels sieht vor, dass ein fluoriertes Polymer mit einem Schmelzpunkt zwischen 100 °C und 500 °C, bevorzugt. zwischen 150 °C und 350 °C eingesetzt ist. Die Auswahl eines solchen fluorierten Polymers gewährleistet, dass das fluorierte Polymer bei Erreichen der Schweißtemperatur bereits weitgehend oder sogar vollständig abgebaut ist.

Da nach einer weiter bevorzugten Ausführungsform das organofunktionelle Silan bei Erreichen der Schweißtemperatur ebenfalls bereits im Wesentlichen abgebaut oder zersetzt ist, stehen beim Einsatz des Bindemittels für schweissbare Korrosionsschutzmittel die für den Korrsionsschutz erforderlichen Metallpartikel weitgehend ungehindert durch Bindemittel miteinander in Kontakt, so dass optimaler Korrosionsschutz gewährleistet ist.

Je nach Verwendung des erfindungsgemäßen Bindemittels kann der Einsatz des fluorierten Polymers in einer großen Bandbreite schwanken, von 0,1 Gewichts-% bis 20 Gewichts-%, bevorzugt werden bis zu 15 Gewichts-%, besonders bevorzugt bis zu 10 Gewichts-%, vorteilhaft mehr als 5 Gewichts-% , besonders vorteilhaft mindestens 2,5 Gewichts-% eingesetzt, jeweils bezogen auf das Bindemittel.

Das fluorierte organische Polymer wird bevorzugt mit einem durchschnittlichen Teilchendurchmesser von mindestens 7,5 HE, bevorzugt von 5 HE, besonders bevorzugt von 6 HE bis maximal 3 HE eingesetzt. Die Angabe und Messung der Teilchengröße erfolgt nach ASTM D 1210.

Das erfindungsgemäße Bindemittel nach Anspruch 1 oder nach einer der vorbeschriebenen Ausführungsformen kann für besondere Anwendungen gezielt weiterentwickelt werden, wenn Co-Binder zugesetzt sind. Co-Binder können das Bindemittel zum Beispiel elastifizieren, wenn dies erforderlich ist. Sie können aber auch die Haftung des Bindemittels oder-unter Verwendung des Bindemittels hergestellter Korrosionsschutzmittel auf dem Werkstück verbessern.

Als Co-Binder eignen sich insbesondere flüssige, organische Bindemittel. Co-Binder werden bevorzugt in einer Menge von 0,01 Gewichts-% bis 20 Gewichts-% eingesetzt. Es können beispielsweise Acrylatharze, Aldehydharze, Alkydharze, Epoxidharze, Epoxidharzester, Ketonharze, Maleinatharze, Melaminharze und Phenolharze einzeln oder in Mischung eingesetzt sein.

Nach einer vorteilhaften Weiterbildung weist das Bindemittel Additive auf, insbesondere Additive zur Einstellung der Viskosität, der Rheologie, der Netz- und Dispergiereigenschaften, des Absetzverhaltens, der Einstellung der Lagerstabilität, der Gleiteigenschaften und der Verarbeitungseigenschaften. Durch Zugabe der an sich bekannten Additive wird das Bindemittel auf die durch den Anwendungszweck oder die Verarbeitungseigenschaften vorgegebenen Anforderungen eingestellt. So sind z. B. die Viskosität und das rheologische Verhalten des Bindemittels beispielsweise nicht nur beim Einmischen von Korrosionsschutzpartikeln oder Pigmenten von Bedeutung sondern auch beim Auftragen des Bindemittels oder unter Verwendung des Bindemittels hergestellter Beschichtungsmittel auf die Oberfläche von Werkstücken. Netz- und Dispergiereigenschaften und Absetzverhalten werden in der Regel eingestellt, um das Einbringen und gleichmäßige Suspendieren von Partikeln zu vereinfachen, seien es partikelförmige, fluorierte Polymere oder Metallpartikel, Salze oder Pigmente. Additive, die die Gleiteigenschaften einstellen, zielen auf die Einstellung von Eigenschaften der durch das Bindemittel oder unter Verwendung des Bindemittels hergestellter Beschichtungsmittel erzeugter Beschichtungen ab. Additive, die die Lagereigenschaften einstellen, zielen darauf ab, ein vorzeitiges Reagieren des Bindemittels oder ggf. daraus hergestellter Beschichtungsmittel zu verhindern.

Der Einsatz der Additive liegt vorzugsweise zwischen 0,01 Gewichts-% und 20 Gewichts-%. Die jeweils geeignete Einsatzmenge wird durch einfache Optimierungsversuche ermittelt.

Das erfindungsgemäße Bindemittel hat vorteilhaft eine Einbrenntemperatur zwischen 150 °C und 350 °C, bevorzugt von 150 °C bis 200 °C. Die Angabe der Einbrenntemperatur bezieht sich auf die jeweils zum Einbrennen erforderliche Objekttemperatur des beschichteten Werkstücks. Das breite Spektrum der einstellbaren Einbrenntemperaturen erweist sich insbesondere dann als sehr vorteilhaft, wenn Werkstücke aus hochfesten Stählen zu beschichten sind. Solche Werkstoffe sollen nach Möglichkeit nicht hoch erhitzt werden, um die Materialfestigkeit nicht nachteilig zu verändern. Es ist erfindungsgemäß ohne weiteres möglich, das Bindemittel und auch daraus hergestellte Korrosionsschutzmittel an diese Vorgaben anzupassen.

Die Einbrenndauer beträgt vorzugsweise von 1 Sekunde bis zu 90 Minuten. Sie hängt wesentlich von der zu erreichenden Einbrenntemperatur und von der Art und Weise ab, wie die Einbrenntemperatur erzeugt wird. Induktive Verfahren arbeiten üblicherweise mit sehr kurzen Einbrennzeiten, Verfahren mit konvektiver Wärmeübertragung benötigen in der Regel längere Einbrennzeiten. Bevorzugt ist eine Einbrenndauer von 30 Sekunden bis zu 30 Minuten, besonders bevorzugt von 1 Minute bis zu 20 Minuten. Das erfindungsgemäße Bindemittel ist nicht auf den Einsatz besonderer Verfahren oder Anlagen für das Einbrennen angewiesen.

Das vorstehend beschriebene Bindemittel ist geeignet zum Einsatz in Korrosionsschutzmitteln. Das Bindemittel wird zu diesem Zweck mit Korrosionsschutz-Partikeln, insbesondere Metallpartikeln, bevorzugt Zink- oder Alumiumpartikeln oder mit Metallsalzen oder einer Mischung verschiedener Metallpartikel oder Metallsalze oder einer Mischung aus Metallpartikeln und Metallsalzen versetzt.

Die vorteilhaften Wirkungen der Titan- bzw. Zirkonverbindungen und des fluorierten Polymers sowie des vorzugsweise in Abhängigkeit von den geforderten Produkteigenschaften ausgewählten organofunktionellen Silans bei der Verwendung des Bindemittels zum Einsatz in einem Korrosionsschutzmittel sind vorstehend im Detail erläutert. Die erfindungsgemäßen Bestandteile des Korrosionsschutzmittels neben dem Bindemittel sind vor allem die vorgenannten Korrosionsschutzpartikel.

Das erfindungsgemäße Korrosionsschutzmittel weist bevorzugt mindestens 0,1 Gewichts-% bis zu 95 Gewichts-%, bevorzugt bis zu 85 Gewichts-%, besonders bevorzugt bis zu 70 Gewichts-%, vorteilhaft bis zu 60 Gewichts-%, besonders vorteilhaft bis zu 35 Gewichts-% Korrosionsschutzpartikel auf, jeweils bezogen auf das Korrosionsschutzmittel.

Das erfindungsgemäße Korrosionsschutzmittel wird nach einer vorteilhaften Ausführungsform so eingestellt, dass die Trockenfilmdicke der fertigen Beschichtung 1 µm bis 50 µm, bevorzugt bis zu 20µm, besonders bevorzugt bis 15 µm, vorteilhaft bis zu 5 µm beträgt. Die Trockenfilmdicke kann vor allem durch Auswahl von Metall- und/oder Salzpartikel geeigneter Größe bestimmt werden. Daneben kann die Trockenfilmdicke durch die jeweiligen Aggregate, mit denen das Korrosionsschutzmittel aufgebracht wird, eingestellt werden.

Es ist als besonderer Vorteil des erfindungsgemäßen Korrosionsschutzmittels anzusehen, dass es über eine im Vergleich zum Stand der Technik besonders gute elektrische Leitfähigkeit verfügt.

Wird erfindungsgemäß ein schweißbares Korrosionsschutzmittel eingesetzt, so zeichnet sich dieses dadurch aus, dass sich insbesondere auch zwei beidseits beschichtete Werkstücke miteinander verschweißen lassen. Beim Verschweißen von zwei beidseits beschichteten Werkstücken müssen insgesamt vier Lagen schweißbaren Korrosionsschutzmittels überwunden werden, um zu einer haltbaren Schweißverbindung zu kommen. Bisher ist eine technisch einsetzbare Beschichtung, die diese Aufgabe zuverlässig leistet, nicht bekannt. Diese Möglichkeit wird erst durch das erfindungsgemäße, schweißbare Korrosionsschutzmittel eröffnet. Sie ist auch auf die -im Gegensatz zum Stand der Technik- kaum geminderte Leitfähigkeit zwischen den Schweißelektroden zurückzuführen, wenn Werkstücke verschweißt werden, die mit dem erfindungsgemäßen schweißbaren Korrosionsschutzmittel beschichtet sind.

Ein besonderer Vorteil des erfindungsgemäßen schweißbaren Korrosionsschutzmittels ist darin zu sehen, dass auch beim Punktschweißen mit Prozesszeiten von ca. 80 Millisekunden zuverlässig Schweißverbindungen entstehen, bei denen weder verdampfendes Metall noch Reste des Bindemittels, insbesondere des Monosilans Schwachstellen in der Schweißnaht erzeugen.

Das erfindungsgemäße Bindemittel und die daraus hergestellten Beschichtungsmittel, insbesondere Korrosionsschutzmittel und/oder schweißbare Korrsionsschutzmittel lassen sich einfach verarbeiten. Sie können mit sämtlichen bekannten Auftragsverfahren auf die Oberfläche von Werkstücken aufgebracht werden, so z. B. durch Rakeln, Spritzen, Streichen, Tauchen, Walzen und dergleichen.

Details der Erfindung werden nachstehend an Ausführungsbeispielen näher erläutert:

### Bindemittel I

Das Bindemittel 1 ist aus den im Anspruch 1 genannten, für die Wirkung des erfindungsgemäßen Bindemittel wesentlichen Komponenten zusammengesetzt: Trimethoxyvinylsilan: 11 Gewichts-%,
Titan-ethylhexanolat (Tetra-2-ethylhexyl Titanat): 27 Gewichts-%,
N-Butyl Polytitanat (Titan tetrabutanolat, polymer): 41 Gewichts-%,
Polyvnylidenfluorid: 4 Gewichts-% und
Alkohol: 17 Gewichts-%
Summe: 100 Gewichts-% bezogen auf das Bindemittel - Sämtliche Angaben zum Bindemittel I und II sind jeweils bezogen auf das Bindemittel.

Die Herstellung des Bindemittels I wird nachstehend erläutert.

### Bindemittel II mit Additiven (vorbereitet für eine verbesserte Einmischung vom Korrosionsschutzmittel)

Trimethoxyvinylsilan: 9,5 Gewichts-%,
Titan-ethylhexanolat (Tetra-2-ethylhexyl Titanat): 24 Gewichts-%,
N-Butyl Polytitanat (Titan tetrabutanolat, polymer): 35,5 Gewichts-%,
Alkohol: 14 Gewichts-%,
Polyvinylidenfluorid: 3,5 Gewichts-% und
Antiabsetzmittel: insgesamt 11 Gewichts-%. Es werden verschiedene Antiabsetzmittel eingesetzt, hier: 2,5 Gewichts-% amorphe Kieselsäure, 3 Gewichts-% Paint Additive Y 25 SN (Ashland) und 5,5 Gewichts-% Ethocell 45-Lösung 11 %-ig in Alkohol der Ewald Dörken AG sowie
Netz- und Dispergieradditiv: 2,5 Gewichts-% Disperbyk 160 Lösung 20 % in aromatischen Kohlenwasserstoffen (Ewald Dörken AG)
Summe: 100 Gewichts-% bezogen auf das Bindemittel

### Herstellung der Bindemittel I und II

Diese Bindemittel-Ansätze I und II werden jeweils in einem kühl- und heizbaren Ansatzbehälter mit integriertem, stufenlos regelbaren Rührwerk hergestellt. Die vorstehend für das Bindemittel I und das Bindemittel II genannten Komponenten werden in der angegebenen Reihenfolge nacheinander in dem Ansetzbehälter unter Rühren vermischt. Die Temperatur liegt zwischen -10 °C und +60 °C. Das Rührwerk ist auf 1.000 UpM eingestellt und nach dem Zugeben der jeweiligen Komponente wird wird das Bindemittel für 5 Minuten gemischt.

Das Bindemittel hat eine Einbrenn-Temperatur von 200 °C.

Nachfolgend wird beispielhaft eine Zusammensetzung von erfindungsgemäßen Korrosionsschutzmitteln beschrieben. Dabei ist auch die Rezeptur für ein schweißbares Korrosionsschutzmittel angegeben:

### Korrosionsschutzmittel I

43 Gewichts-% des Bindemittels II werden mit 55 Gewichts-% Zinkpaste (Zinkpaste: 90 Gewichts-% Zinkstaub mit 10 Gewichts-% organischem Lösungsmittel stabilisiert) mit einem mittleren Durchmesser der Zinkpartikel von ca. 4 µm sowie mit 2 Gewichts-% Aluminiumpaste versetzt. Zink- und Aluminiumpartikel dienen dem kathodischen Korrosionsschutz. Diese Rezeptur des Korrosionsschutzmittels I beträgt 100 Gewichts-%.

### Korrosionsschutzmittel II

Das hier beschriebene Korrosionsschutzmittel II ist ein schweißbares Korrosionsschutzmittel. 45 Gewichts-% des Bindemittels II werden mit 25 Gewichts-% Zinkpaste (Zinkpaste: 90 Gewichts-% Zinkflake mit 10 Gewichts-% organischem Lösungsmittel stabilisiert) mit einem mittleren Durchmesser der Zinkpartikel von ca. 4 µm sowie mit 25 Gewichts-% Eisenphospid versetzt. Zinkpartikel und Eisenphospid werden als Korrosionsschutzpartikel eingesetzt. Zudem werden 5 Gewichts-% eines organischen Lösungsmittels zum Einstellen der Viskosität zugesetzt. Wird kein Lösungsmittel benötigt, wird für das Korrosionsschutzmittel II mehr Bindemittel, Zinkpaste und Eisenphosphid im Verhältnis 2:1:1 eingesetzt. Die vorbeschriebene Zusammensetzung des schweißbaren Korrosionsschutzmittels beträgt 100 Gewichts-%.

Zur Herstellung des schweißbaren Korrosionsschutzmittels wird das Bindemittel vorgelegt. Das Einmischen der Korrosionsschutzpartikel erfolgt in dem vorbeschriebenen Ansetzbehälter bei 1.850 UpM für 15 Minuten. Die Herstellung des schweißbaren Korrosionsschutzmittels erfolgt in einem Temperaturbereich von Raumtemperatur bis maximal 40 °C.

Das schweißbare Korrosionsschutzmittel wird auf die Komponenten der B-Säule einer Kfz-Karosserie aufgetragen. Die Einbrenntemperatur, gemessen als Objekttemperatur, beträgt 200 °C, die Einbrenndauer in einem Konvektions-Durchlaufofen beträgt 30 Minuten. Die Trockenfilmdicke der Korrosionsschutz-Beschichtung beträgt 10 ±3 µm. Diese Beschichtung widersteht dem Salzsprühtest nach DIN 50 021 für mindestens 48 Stunden ohne Rotrostbildung.

Zwei Komponenten der B-Säule, deren Materialstärke 2 mm beträgt und die beide auf die vorbeschriebene Weise mit dem Korrosionsschutzmittel II beschichtet wurden, werden mittels Elektroden punktverschweißt. Die derart punktverschweißten Komponenten können zum Bau von Kraftfahrzeugen eingesetzt werden.

## Patentansprüche

1. Bindemittel Für ein schweißbares korrosionsschutzmittel, aufweisend:
- mindestens ein Titan- und/oder Zirkonverbindung in einer Menge von mind. 12 Gewichts-% bis 95 Gewichts-% bezogen auf 100 Gewichts-% des Bindemittels,
- mindestens ein organofunktionelles Silan, insbesondere ein Monosilan und
- ein Lösungsmittel,
**dadurch gekennzeichnet, dass**
das Bindemittel mindestens ein fluoriertes Polymer aufweist, wobei das im Bindemittel enthaltene fluorierte Polymer in dem Lösungsmittel des Bindemittels unlöslich ist.

2. Bindemittel nach Anspruch 1, **dadurch gekennzeichnet, dass** die mindestens eine Titan- und/oder Zirkonverbindung ein Titanat und/ oder Zirkonate, bevorzugt ein organisches Titanat und/oder Zirkonat ist.

3. Bindemittel nach Anspruch 2, **dadurch gekennzeichnet, dass** ein Titan- und/oder Zirkonchelat als organische Titan- und/oder Zirkonverbindung eingesetzt ist.

4. Bindemittel nach mindestens einem der Ansprüche 1 bis 3, **dadurch gekennzeichnet, dass** die mindestens eine Titan- und/oder Zirkonverbindung in einer Menge von 12 bis 95 Gewichts-%, bevorzugt mindestens 15 Gewichtes-%, jeweils bezogen auf das Bindemittel zugesetzt ist.

5. Bindemittel nach mindestens einem der Ansprüche 1 bis 3, **dadurch gekennzeichnet, dass** die mindestens eine Titan- und/oder Zirkonverbindung in einer Menge von 12 bis 95 Gewichts-%, bevorzugt bis zu 80 Gewichts-%, besonders bevorzugt bis zu 70 Gewichts-%, vorteilhaft bis zu 50 Gewichts-%, besonders vorteilhaft bis zu 30 Gewichts-%, jeweils bezogen auf das Bindemittel zugesetzt ist.

6. Bindemittel nach mindestens einem der vorangehenden Patentansprüche, **dadurch gekennzeichnet, dass** als organofunktionelles Silan eine Silan-Verbindung aus der Gruppe der Methylphenyl- Phenyl- und Methylsiliconharze, der Silikonharze mit Vinyl- oder Allylgruppen, Acrylestern, Äthyleniminogruppen, fluorierten Phenylresten, Fluorderivaten, Hydroxyorganogruppen, Carboxyorganogruppen, Aminoalkylgruppen, der Siloxan-Silan-Mischpolymerisate, der Silan-Verbindungen mit Phenylengruppen oder der Silan-Verbindungen mit Cokondensationsprodukten mit organischen Harzen ist oder ein Mischung aus den vorgenannten Silan-Verbindungen.

7. Bindemittel nach mindestens einem der vorangehenden Patentansprüche, **dadurch gekennzeichnet, dass** das mindestens eine organofunktionelle Silan in einer Menge von 0,01 bis 20 Gewichts-%, vorteilhaft mehr als 2 Gewichts.%, vorzugsweise mehr als 5 Gewichts-%, bevorzugt bis zu 15 Gewichts-%, besonders bevorzugt bis zu 12 Gewichts-%, vorteilhaft bis zu 10 Gewichts-%, besonders vorteilhaft bis zu 7 Gewichts-%, jeweils bezogen auf das Bindemittel eingesetzt ist.

8. Bindemittel nach mindestens einem der vorangehenden Patentansprüche, **dadurch gekennzeichnet, dass** die Zersetzungstemperatur des organofunktionellen Silans unter der Schweisstemperatur liegt.

9. Bindemittel nach Anspruch 1, **dadurch gekennzeichnet, dass** das Lösungsmittel ein organisches Lösungsmittel, insbesondere ein Lösungsmittel oder eine Mischung von Lösungsmitteln aus der Gruppe ist, die aufweist Alkohol, aliphatische und aromatische Kohlenwasserstoffe und Ester.

10. Bindemittel nach Anspruch i, **dadurch gekennzeichnet, dass** das Bindemittel ein fluoriertes Polymer oder eine Mischung fluorierter Polymere aufweist.

11. Bindemittel nach Anspruch 1, **dadurch gekennzeichnet, dass** das Bindemittel eines der fluorierten Polymere oder eine Mischung von fluorierten Polymeren aufweist, das aus der Gruppe ist, die Polytetrafluorethylen (PTFE), Polyvinylidenfluorid (PVDF), Tetrafluorethylen/Hexafluorpropylen-Copolymer (FEP), Perfluoralkoxy-Copolymer (PFA), Copolymer von Tetrafluorethylen mit perfluoriertem Propylen und Perfluoralkylvinylether (EPE), Copolymer aus Tetrafluorethylen und Perflu-ormethylvinylether (MFA), Copolymer von Tetrafluorethylen mit Ethylen (ETFE), Polychlortrifluorethylen (PCTFE) und Copolymer von Ethylen und Chlortrifluo-rethylen (ECTFE) aufweist.

12. Bindemittel nach Anspruch 1, **dadurch gekennzeichnet, dass** das mindestens eine fluorierte Polymer einen Schmelzpunkt zwischen 100 °C und 450 °C aufweist, vorzugsweise einen Schmelzpunkt zwischen 150 °C und 350 °C.

13. Bindemittel nach Anspruch 1, **dadurch gekennzeichnet, dass** das fluorierte Polymer mit einem Anteil von 0,1 % Gewichts-% bis 20 Gewichts-%, vorteilhaft bis zu 15 Gewichts-%, besonders vorteilhaft bis zu 10 Gewichts-%, vorzugsweise mehr als 5 Gewichts-%, besonders vorteilhaft mehr als 2,5 Gewichts-%, jeweils bezogen auf das Bindemittel, eingesetzt ist.

14. Bindemittel nach Anspruch 1, **dadurch gekennzeichnet, dass** das fluorierte, im Lösungsmittel des Bindemittels unlösliche Polymer einen durchschnittlichen Teil-chen-Durchmesser in einem Bereich von 7,5 HE bis zu 3 HE, vorzugsweise von 6 HE, bis zu 3 HE, bevorzugt von 5 HE bis zu 3 HE, gemessen nach ASTM D 1210 aufweist.

15. Bindemittel nach Anspruch 1, **dadurch gekennzeichnet, dass** mindestens ein Co-Binder eingesetzt ist.

16. Bindemittel nach Anspruch 15, **dadurch gekennzeichnet, dass** der mindestens eine Co-Binder in einer Menge von 0,01 bis 20 Gewichts-% bezogen auf das Bindemittel eingesetzt ist.

17. Bindemittel nach Anspruch 15 oder 16, **dadurch gekennzeichnet, dass** der mindestens eine Co-Binder ein lösliches organisches Bindemittel ist.

18. Bindemittel nach mindestens einem der Ansprüche 15 bis 17, **dadurch gekennzeichnet, dass** der mindestens eine Co-Binder oder eine Mischung solcher Co-Binder aus der Gruppe ausgewählt ist, die enthält: Acrylatharze, Aldehydharze, Alkydharze, Epoxidharze, Epoxidharzester, Ketonharze, Maleinatharze, Melaminharze und Phenolharze.

19. Bindemittel nach mindestens einem der vorangehenden Ansprüche, **dadurch gekennzeichnet, dass** das Bindemittel Additive aufweist, insbesondere Additive zur Einstellung der Viskosität, der Rheologie, der Netz- und der Dispergiereigenschaften, des Absetzverhaltens, der Einstellung der Lagerstabilität, der Gleiteigenschaften und der verarbeitungseigenschaften.

20. Bindemittel nach Anspruch 19, **dadurch gekennzeichnet, dass** ein Additiv oder eine Mischung von Additiven in einer Menge von 0,01 Gewichts-% bis zu 20 Gewichts% bezogen auf das Bindemittel in dem Bindemittel eingesetzt ist.

21. Bindemittel nach mindestens einem der vorangehenden Ansprüche, **dadurch gekennzeichnet, dass** die Objekttemperatur beim Einbrennen 100 °C bis 500 °C, vorzugsweise zwischen 150°C und 350 °C beträgt.

22. Bindemittel nach mindestens einem der vorangehenden Ansprüche, **dadurch gekennzeichnet, dass** die Einbrenndauer von 1 Sekunde bis zu 90 Minuten, vorzugsweise von 30 Sekunden bis zu 30 Minuten, besonders bevorzugt von 1 Minute bis zu 20 Minuten beträgt.

23. Korrosionsschutzmittel mit einem Bindemittel nach mindestens einem der Ansprüche 1 bis 22 und mit Korrosionsschutzpartikeln, **dadurch gekennzeichnet, dass** es ein schweißbares Korrosionsschutzmittel ist.

24. Korrosionsschutzmittel nach Anspruch 23, **dadurch gekennzeichnet, dass** als Korrosionsschutzpartikel Metallsalze, einzeln oder in Mischung, insbesondere Eisenphosphid oder Molybdändisulfid und/oder Graphit eingesetzt sind.

25. Korrosionsschutzmittel nach Anspruch 23, **dadurch gekennzeichnet, dass** Metallpartikel oder Partikel aus einer Metallegierung, insbesondere Zink und / oder Aluminiumpartikel als Korrosionsschutzpartikel eingesetzt sind.

26. Korrosionsschutzmittel nach Anspruch 23, **dadurch gekennzeichnet, dass** von 0,1 Gewichts-% bis zu 95 Gewichts-%, bevorzugt bis zu 85 Gewichts-%, besonders bevorzugt bis zu 70 Gewichts-%, vorteilhaft bis zu 60 Gewichts-%, besonders vorteilhaft bis zu 35 Gewichts-% Korrosionsschutzpartikel, jeweils bezogen auf das Korrosionsschulzmittel, eingesetzt sind.

27. Korrosionsschutzmittel nach mindestens einem der Ansprüche 23 bis 26, **dadurch gekennzeichnet, dass** das Korrosionsschutzmittel so zusammengesetzt ist, dass dessen Trockenfilmdicke bis zu 50 µm, bevorzugt bis zu 20 µm, besonders bevorzugt bis zu 15 µm, vorteilhaft bis zu 5 µm beträgt.

28. Korrosionsschutzmittel nach mindestens einem der Ansprüche 23 bis 27, **dadurch gekennzeichnet, dass** es einem damit beschichteten, zu verschweißenden Werkstück eine Beständigkeit gegen den Salzsprühtest nach DIN 50 021 von mindestens 48 Stunden gewährleistet.

29. Werkstück aus Metall, beschichtet mit einem Korrosionsschutzmittel nach mindestens einem der Patentansprüche 23 bis 28.

## Claims

1. A binder for a weldable corrosion-protective agent, comprising:
- at least one titanium and/or zirconium compound in an amount of at least 12 weight % to 95 weight % with respect to 100 weight % of the binder,
- at least one organofunctional silane, in particular a monosilane and
- a solvent,
**characterized in that**
the binder comprises at least one fluorinated polymer, wherein the fluorinated polymer contained in the binder is insoluble in the solvent of the binder.

2. The binder according to claim 1, **characterized in that** the at least one titanium and/or zirconium compound is a titanate and/or a zirconate, preferably an organic titanate and/or zirconate.

3. The binder according to claim 2, **characterized in that** a titanium and/or zirconium chelate is used as the organic titanium and/or zirconium compound.

4. The binder according to at least one of claims 1 to 3, **characterized in that** the at least one titanium and/or zirconium compound is present in an amount of 12 to 95 weight %, preferably at least 15 weight %, each with respect to the binder.

5. The binder according to at least one of claims 1 to 3, **characterized in that** the at least one titanium and/or zirconium compound is added in an amount of 12 to 95 weight %, preferably up to 80 weight %, particularly preferably up to 70 weight %, advantageously up to 50 weight %, particularly advantageously up to 30 weight %, each with respect to the binder.

6. The binder according to at least one of the preceding claims, **characterized in that**, as the organofunctional silane a silane compound is chosen from the group comprising methylphenyl, phenyl and methyl silicone resins, the silicone resins with vinyl or allyl groups, acryl esters, ethyleneimino groups, fluorinated phenyl residues, fluorine derivates, hydroxyorgano groups, carboxyorgano groups, aminoalcyl groups, of the siloxane-silane-mixed polymerisates, of the silane compounds with phenylene groups or the silane compounds with cocondensation products with organic resins, or a mixture of the mentioned silane compounds.

7. The binder according to at least one of the preceding claims, **characterized in that** the at least one organofunctional silane is used in an amount of 0.01 to 20 weight %, advantageously of more than 2 weight %, preferably more than 5 weight %, preferably up to 15 weight %, particularly preferably up to 12 weight %, advantageously up to 10 weight %, particularly advantageously up to 7 weight %, each with respect to the binder.

8. The binder according to at least one of the preceding claims, **characterized in that** the decomposition temperature of the organofunctional silane is below the welding temperature.

9. The binder according to claim 1, **characterized in that** the solvent is an organic solvent, in particular a solvent or a mixture of solvents from the group comprising alcohol, aliphatic and aromatic hydrocarbons and esters.

10. The binder according to claim 1, **characterized in that** the binder is a fluorinated polymer or a mixture of fluorinated polymers.

11. The binder according to claim 1, **characterized in that** the binder comprises one of the fluorinated polymers or a mixture of the fluorinated polymers selected from the group comprising polytetrafluoroethylene (PTFE), polyvinylidene fluoride (PVDF), tetrafluoroethylene / hexafluoropropylene copolymer (FEP), perfluoroalcoxycopolymer (PFA), copolymer of tetrafluoroethylene with perfluorinated propylene and perfluoroalcylvinylether (EPE), copolymer of tetrafluoroethylene and perfluoromethylvinylether (MFA), copolymer of tetrafluoroethylene with ethylene (ETFE), polychlorotrifluoroethylene (PCTFE) and copolymer of ethylene and chlorotrifluoroethylene (ECTFE).

12. The binder according to claim 1, **characterized in that** the at least one fluorinated polymer has a melting point between 100 °C and 450 °C, preferably a melting point between 150 °C and 350 °C.

13. The binder according to claim 1, **characterized in that** the fluorinated polymer is used in a proportion of 0.1 % by weight to 20 % by weight, advantageously up to 15 weight %, particularly advantageously up to 10 weight %, preferably more than 5 weight %, particularly preferably more than 2.5 weight %, each with respect to the binder.

14. The binder according to claim 1, **characterized in that** the fluorinated polymer insoluble in the solvent of the binder has an average particle diameter in the range of between 7.5 HE and 3 HE, preferably between 6 HE and 3 HE, preferably between 5 HE and 3 HE, measured according to ASTM D 1210.

15. The binder according to claim 1, **characterized in that** at least one co-binder is used.

16. The binder according to claim 15, **characterized in that** the at least one co-binder is used in an amount of 0.01 to 20 weight % with respect to the binder.

17. The binder according to claim 15 or 16, **characterized in that** the at least one co-binder is a soluble organic binder.

18. The binder according to at least one of claims 15 to 17, **characterized in that** the at least one co-binder or a mixture of such co-binders is selected from the group comprising acrylate resins, aldehyde resins, alcyd resins, epoxy resins, epoxy resin esters, cetone resins, maleate resins, melamine resins and phenol resins.

19. The binder according to at least one of the preceding claims, **characterized in that** the binder comprises additives, in particular additives for adjusting viscosity, rheology, wetting and dispersing characteristics, deposition behavior, for adjusting storage stability, slipping characteristics and processing characteristics.

20. The binder according to claim 19, **characterized in that** an additive or a mixture of additives is used in the binder in an amount of 0.01 weight % to 20 weight % with respect to the binder.

21. The binder according to at least one of the preceding claim, **characterized in that** the object temperature during baking is 100 °C to 500 °C, preferably between 150 °C and 350 °C.

22. The binder according to at least one of the preceding claims, **characterized in that** the baking duration is between 1 second and 90 minutes, preferably between 30 seconds and 30 minutes, particularly preferably between 1 minute and 20 minutes.

23. A corrosion-protective agent, comprising a binder according to at least one of claims 1 to 22 and having corrosion-protective particles, **characterized in that** it is a weldable corrosion-protective agent.

24. A corrosion-protective agent according to claim 23, **characterized in that** metal salts, singly or in mixture, in particular iron phosphide or molybdenum disulphide and/or graphite are used as corrosion-protective particles.

25. The corrosion-protective agent according to claim 23, **characterized in that** metal particles or particles of a metal alloy, in particular zinc and/or aluminum particles, are used as corrosion-protective particles.

26. The corrosion-protective agent according to claim 23, **characterized in that** corrosion-protective particles are used in an amount of 0.1 weight % to 95 weight %, preferably up to 85 weight %, particularly preferably up to 70 weight %, advantageously up to 60 weight %, particularly advantageously up to 35 weight %, each with respect to the corrosion-protective agent.

27. The corrosion-protective agent according to at least one of claims 23 to 26, **characterized in that** the corrosion-protective agent is composed in such a way that its dry film thickness is up to 50 µm, preferably up to 20 µm, particularly preferably up to 15 µm, advantageously up to 5 µm.

28. The corrosion-protective agent according to at least one of claims 23 to 27, **characterized in that** it ensures a resistance against the salt spraying test according to DIN 50 021 of at least 48 hours for a workpiece coated therewith and to be welded.

29. A workpiece of metal, coated with a corrosion-protective agent according to at least one of claims 23 to 28.

## Revendications

1. Liant pour un agent anticorrosion soudable, comportant :
au moins un composé de titane et/ou de zirconium, dans une quantité d'au moins 12% en poids à 95% en poids par rapport à 100% en poids de liant,
au moins un silane organiquement fonctionnel, en particulier un monosilane, et
un solvant,
**caractérisé en ce que**
le liant comporte au moins un polymère fluoré, le polymère fluoré inclus dans le liant étant insoluble dans le solvant du liant.

2. Liant selon la revendication 1, **caractérisé en ce que** l'au moins un composé de titane et/ou de zirconium est un titanate et/ou un zirconate, de préférence un titanate et/ou un zirconate organique.

3. Liant selon la revendication 2, **caractérisé en ce qu'**un chélaté de titane et/ou de zirconium est utilisé comme composé de titane et/ou de zirconium.

4. Liant selon au moins l'une des revendications 1 à 3, **caractérisé en ce que** l'au moins un composé de titane et/ou de zirconium est ajoutée dans une quantité de 12 à 95% en poids, de préférence d'au moins 15% en poids, toujours par rapport au liant.

5. Liant selon au moins l'une des revendications 1 à 3, **caractérisé en ce que** l'au moins un composé de titane et/ou de zirconium est ajouté dans une quantité de 12 à 95% en poids, de préférence jusqu'à 80% en poids, de manière particulièrement préférée jusqu'à 70% en poids, avantageusement jusqu'à 50% en poids, particulièrement avantageusement jusqu'à 30% en poids, toujours par rapport au liant.

6. Liant selon au moins l'une des revendications précédentes, **caractérisé en ce que** le silane organiquement fonctionnel utilisé est un composé de silane du groupe comprenant les résines de méthylphényle, de phényle et de méthylsilicone, les résines de silicone avec des groupes vinyles ou allyliques, les esters acryliques, les groupes d'éthylènimine, les esters de phényle fluorés, les dérivés fluorés, les groupes hydroxyorgano, les groupes carboxyorgano, les groupes d'aminoalkyle, les polymérisats mélangés de silane et de silicone, les composés de silane avec des groupes phényles ou les composés de silane avec des produits de cocondensation avec des résines organiques, ou un mélange des composés de silane mentionnés ci-dessus.

7. Liant selon au moins l'une des revendications précédentes, **caractérisé en ce que** l'au moins un silane organiquement fonctionnel est utilisé dans une quantité de 0,01 à 20% en poids, avantageusement de plus de 2% en poids, préférentiellement de plus de 5% en poids, de préférence jusqu'à 15% en poids, de manière particulièrement préférée jusqu'à 12% en poids, avantageusement jusqu'à 10% en poids, particulièrement avantageusement jusqu'à 7% en poids, toujours par rapport au liant.

8. Liant selon au moins l'une des revendications précédentes, **caractérisé en ce que** la température de décomposition du silane organiquement fonctionnel est inférieure à la température de soudage.

9. Liant selon la revendication 1, **caractérisé en ce que** le solvant est un solvant organique, en particulier un solvant ou un mélange de solvants issu du groupe comprenant l'alcool, les hydrocarbures aliphatiques et aromatiques et les esters.

10. Liant selon la revendication 1, **caractérisé en ce que** le liant comporte un polymère fluoré ou un mélange de polymères fluorés.

11. Liant selon la revendication 1, **caractérisé en ce que** le liant comporte l'un des polymères fluorés ou un mélange de polymères fluorés issu du groupe comprenant le polytétrafluoroéthylène (PTFE), le polyfluorure de vinylidène (PVDF), un copolymère de tétrafluoroéthylènehexafluoropropylène (FEP), un copolymère de perfluoroalcoxy (PFA), un copolymère de tétrafluoroéthylène avec du propylène perfluoré et du perfluoroalkylvinyléther (EPE), un copolymère à base de tétrafluoroéthylène et de perfluorométhylvinyléther (MFA), un copolymère de tétrafluoroéthylène avec de l'éthylène (ETFE), le polychlorotrifluoroéthylène (PCTFE) et un copolymère d'éthylène et de chlorotrifluoroéthylène (ECTFE).

12. Liant selon la revendication 1, **caractérisé en ce que** l'au moins un polymère fluoré présente un point de fusion entre 100°C et 450°C, de préférence un point de fusion entre 150°C et 350°C.

13. Liant selon la revendication 1, **caractérisé en ce que** le polymère fluoré est utilisé dans une quantité de 0,1% en poids à 20% en poids, avantageusement jusqu'à 15% en poids, particulièrement avantageusement jusqu'à 10% en poids, de préférence plus de 5% en poids, de manière particulièrement préférée plus de 2,5% en poids, toujours par rapport au liant.

14. Liant selon la revendication 1, **caractérisé en ce que** le polymère fluoré insoluble dans le solvant du liant présente un diamètre moyen de particule dans une plage de 7,5 HE à 3 HE, de préférence de 6 HE à 3 HE, préférentiellement de 5 HE à 3 HE, mesuré selon ASTM D 1210.

15. Liant selon la revendication 1, **caractérisé en ce qu'**au moins un co-liant est utilisé.

16. Liant selon la revendication 15, **caractérisé en ce que** l'au moins un co-liant est utilisé dans une quantité de 0,01 à 20% en poids par rapport au liant.

17. Liant selon la revendication 15 ou 16, **caractérisé en ce que** l'au moins un co-liant est un liant organique soluble.

18. Liant selon au moins l'une des revendications 15 à 17, **caractérisé en ce que** l'au moins un co-liant ou un mélange de ces co-liants est choisi parmi le groupe comprenant : les résines acrylates, les résines aldéhydiques, les résines alkydes, les résines époxydes, les esters de résine époxyde, les résines cétoniques, les résines maléiques, les résines mélamines et les résines phénoliques.

19. Liant selon au moins l'une des revendications précédentes, **caractérisé en ce que** le liant comporte des additifs, en particulier des additifs pour l'ajustement de la viscosité, de la rhéologie, des propriétés mouillantes et de dispersion, de la décantation, l'ajustement de la stabilité au stockage, des propriétés de glissement et des propriétés de traitement.

20. Liant selon la revendication 19, **caractérisé en ce qu'**un additif ou un mélange d'additifs est utilisé dans le liant, dans une quantité de 0,01% en poids à 20% en poids par rapport au liant.

21. Liant selon au moins l'une des revendications précédentes, **caractérisé en ce que** la température de l'objet est comprise entre 100°C et 500°C, de préférence entre 150°C et 350°C, pendant la cuisson.

22. Liant selon au moins l'une des revendications précédentes, **caractérisé en ce que** la durée de cuisson varie entre 1 seconde et 90 minutes, de préférence entre 30 secondes et 30 minutes, et de manière particulièrement préférée entre 1 minute et 20 minutes.

23. Agent anticorrosion avec un liant selon au moins l'une des revendications 1 à 22 et avec des particules anticorrosion, **caractérisé en ce qu'**il s'agit d'un agent anticorrosion soudable.

24. Agent anticorrosion selon la revendication 23, **caractérisé en ce que** des sels métalliques, individuels ou mélangés, en particulier du phosphure de fer ou du disulfure de molybdène et/ou du graphite, sont utilisés comme particules anticorrosion.

25. Agent anticorrosion selon la revendication 23, **caractérisé en ce que** des particules métalliques ou des particules issues d'un alliage métallique, en particulier des particules de zinc et/ou d'aluminium, sont utilisées comme particules anticorrosion.

26. Agent anticorrosion selon la revendication 23, **caractérisé en ce que** les particules anticorrosion sont utilisées dans une quantité de 0,1% en poids à 95% en poids, de préférence jusqu'à 85% en poids, de manière particulièrement préférée jusqu'à 70% en poids, avantageusement jusqu'à 60% en poids, particulièrement avantageusement jusqu'à 35% en poids, toujours par rapport au agent anticorrosion.

27. Agent anticorrosion selon au moins l'une des revendications 23 à 26, **caractérisé en ce que** le agent anticorrosion est composé de telle façon, que son épaisseur de film sec mesure jusqu'à 50 µm, de préférence jusqu'à 20 µm, de manière particulièrement préférée jusqu'à 15 µm, avantageusement jusqu'à 5 µm.

28. Agent anticorrosion selon au moins l'une des revendications 23 à 27, **caractérisé en ce qu'**il garantit à une pièce enduite à souder une résistance d'au moins 48 heures à l'essai au brouillard salin selon DIN 50 021.

29. Pièce métallique enduite avec un agent anticorrosion selon au moins l'une des revendications 23 à 28.
